# EUROPEAN PATENT SPECIFICATION

(11) **EP 3 618 563 B1**
(45) Date of publication and mention of the grant of the patent: **06.01.2021**
(21) Application number: 19200895.1
(22) Date of filing: 26.03.2014
(51) Int. Cl.: H04W 88/02

(54) **SYSTEM, METHOD, AND DEVICE FOR EXPOSING WIRELESS MODULE DATA STORAGE**
SYSTEM, VERFAHREN UND VORRICHTUNG ZUR EXPOSITION EINES DRAHTLOSMODULDATENSPEICHERS
SYSTÈME, PROCÉDÉ ET DISPOSITIF POUR EXPOSER UN SUPPORT DE DONNÉES DE MODULE SANS FIL

(30) Priority: 17.04.2013 US 201313864914
(43) Date of publication of application: 04.03.2020
(62) Divisional of application: 14719362.7
(73) Proprietor: GUANGDONG OPPO MOBILE TELECOMMUNICATIONS CORP., LTD., Wusha, Chang'an Dongguan, Guangdong 523860 (CN)
(72) Inventor: SURESH, Harsh, Chicago, Illinois 60611 (US)
(74) Representative: Novagraaf Technologies

(56) References cited:
- WO-A1-00/02361
- WO-A1-2008/017830
- US-A1- 2012 238 206
- US-B1- 6 289 464

## Description

### TECHNICAL FIELD

This disclosure relates generally to wireless modules and host computing devices. More particularly, but not by way of limitation, the disclosure is related to wireless modules having integrated data storage.

### BACKGROUND

Wireless modules, such as 2G, 3G, 4G, and WiFi wireless modules are often integrated into wide variety of computing devices. Additionally, these wireless modules typically include integrated storage media (e.g., memory), which is used to store instructions for controlling the wireless module, as well as wireless module application generated data. Devices that incorporate such wireless modules include any computing device configured for communication over a network, including, but not limited to, machine-to-machine (M2M) devices. In general, M2M devices may include many different types of devices that are configured to communicate over wireless and wired networks using a wireless module. M2M devices operate over networks such as the Internet and may comprise what is referred to as the Internet of Things (IOT). Generally, the IOT includes various autonomous and/or interconnected, computing devices that serve a wide variety of purposes.

M2M devices range in size from very large to very small. For example, a large-scale M2M device includes a vehicle or a large household appliance, whereas a small M2M device may include a watch or sensor. Regardless of the size of the device, each device provides one or more functionalities, typically by execution of a host device application. For example, a watch device may be configured to provide time keeping functionalities and other ancillary services by way of a host watch application. During operation, the host device applications) may generate host device application data (e.g., user data). In some instances, it may be advantageous to store this user data in a data store.

It will be understood that manufacturers often incorporate a portable storage interface into the M2M device, rather than integrating a storage media into a small M2M computing device, lire portable storage interface may accept, for example, an SD card or other similar storage media that is used for storing host device application data. Removing integrated storage for the host device application reduces the overall size and cost of the M2M device.

US 2012/238206 discloses a communications device including a near field communication (NFC) device, at least one memory configured to store secure application data to be communicated via the NFC device and a secure element (SE) application programming interface (API) associated with the secure application data, and a processor coupled with the NFC device and the at least one memory. The processor may be configured to disable the SE API to prevent access to the secure application data based upon a security condition and enable the SE API to allow access to the secure application data based upon a security restore event.

US 6289464 discloses a system and method for receiving wireless information on a portable computing device includes powering a wireless receiver only from a battery of the portable computing device. Receiving wireless information and storing the wireless information in memory of the wireless receiver. The wireless receiver wakes up a processor of the portable computing device when the wireless information fills a threshold of the memory available in the wireless receiver. The wireless information is then transferred from the memory of the wireless receiver to the memory of the portable computing device.

### SUMMARY

One aspect of the present invention provides a wireless communication module in accordance with claim 1.

A further aspect of the present invention provides a method for utilizing a wireless module data store of a wireless communication module in accordance with claim 7.

### BRIEF DESCRIPTION OF THE DRAWINGS

Certain embodiments of the present technology are illustrated by the accompanying figures. It will be understood that the figures are not necessarily to scale and that details not necessary for an understanding of the technology or that render other details difficult to perceive may be omitted. It will be understood that the technology is not necessarily limited to the particular embodiments illustrated herein, but by the scope of the appended claims.
FIG. 1 is a schematic diagram of a system having a host computing device that includes a wireless communication module that is configured to practice aspects of the present technology.
FIG. 2A is a signal flow diagram of a method of controlling a wireless module data store, the diagram illustrating a request to reserve space and a response indicative of a failure to reserve space.
FIG. 2B is a signal flow diagram of a method of controlling a wireless module data store, where space is successfully reserved and user data is successfully saved in the wireless module data store.
FIG. 2C is a signal flow diagram of a method of controlling a wireless module data store, where user data is retrieved from the wireless module data store.
FIG. 2D is a signal flow diagram of a method of controlling a wireless module data store, where user data is successfully deleted from the wireless module data store.
FIG. 2E is a signal flow diagram of a method of storing user data on a network data store.
FIG. 2F is a signal flow diagram of a method of storing user data on a network data store when user data cannot be stored on the wireless module data store.
FIG. 3 is a flowchart of a method for utilizing a wireless module data store of a wireless communication module residing on a host computing device.
FIG. 4 is a flowchart of a plurality of control sub-methods for accessing and using a wireless module data store, including setting permissions for a reserved user space, as well as saving, retrieving, or deleting user data.
FIG. 5 is a flowchart of a method of transmitting or forwarding user data from a wireless module data store to a network data store.

### DETAILED DESCRIPTION

While this technology is susceptible of embodiment in many different forms, there is shown in the drawings and will herein be described in detail several specific embodiments with the understanding that the present disclosure is to be considered as an exemplification of the principles of the technology and is not intended to limit the technology to the embodiments illustrated.

The terminology used herein is for the purpose of describing particular embodiments only and is not intended to be limiting of the present technology. As used herein, the singular forms "a", "an" and "the" are intended to include the plural forms as well, unless the context clearly indicates otherwise. It will be further understood that the terms "comprises" and/ or "comprising," when used in this specification, specify the presence of stated features, integers, steps, operations, elements, and/or components, but do not preclude the presence or addition of one or more other features, integers, steps, operations, elements, components, and/or groups thereof.

It will be understood that like or analogous elements and/or components, referred to herein, may be identified throughout the drawings with like reference characters. It will be further understood that several of the figures are merely schematic representations of the present technology. As such, some of the components may have been distorted from their actual scale for pictorial clarity.

Generally, the present technology is directed to a system, method, and device for exposing data storage of a wireless module to host applications of a host computing device. By way of non-limiting examples, a host computing device may comprise a watch, a pager, a sensor, a cellular telephone, an appliance, a vehicle, or other similar machine-to-machine devices that would be known to one of ordinary skill in the art with the present disclosure before them. An exemplary host application comprises any one, or combination, of executable instructions that provide one or more functionalities. For example, functionalities for a watch host application may include a clock display functionality, where the watch host application may obtain time information from a central server and display the time information on the display of the watch. The watch host application may also provide other ancillary functionalities such as a message display function, where email, Short Message Service (SMS), or other messages are presented on the display of the watch. An exemplary functionality may include Global Positioning System (GPS) tracking, where a location of the watch is tracked over time. This user data generated by the GPS tracking functionality may be stored in a reserved space of a wireless module of the host computing device, as will be described in greater detail below.

In accordance with the present disclosure, a wireless module may comprise 2G, 3G, 4G, and/or WiFi wireless modules, as well as other similar wireless modules.

In some embodiments, a wireless module data store of a wireless module is exposed through an API. In some instances, wireless module manufacturers may expose the API information to host computing device manufacturers to allow the host computing device manufacturers to program their host device applications to utilize the API of the wireless communication module to take advantage of the wireless module data store of the wireless communication module. Thus, host computing device manufacturers may reduce the need to include dedicated storage for their host application, thereby reducing the host computing device manufacturing, costs.

In some embodiments, the API may couple a host application with a data storage load module of the wireless module to access, evaluate, and manage available and reserved user space in the wireless module data store. Also, the API may allow a host application to store, retrieve, and delete user data in the wireless module data store.

The data storage load module may also query the wireless module to determine available storage space and reserve a portion of the available storage for the host application. In some instances, a system may include the host computing device and a network data store which are communicatively coupled together via any one or combination of private or public networks, such as the Internet. User data generated by the host application may be stored on or forwarded to the network data store in a synchronous or asynchronous manner.

In some embodiments, the API may also determine excess GPU capacity of a processor of the wireless module. The API may be configured to allow the host application to utilize at least a portion of the excess CPU capacity of the wireless module.

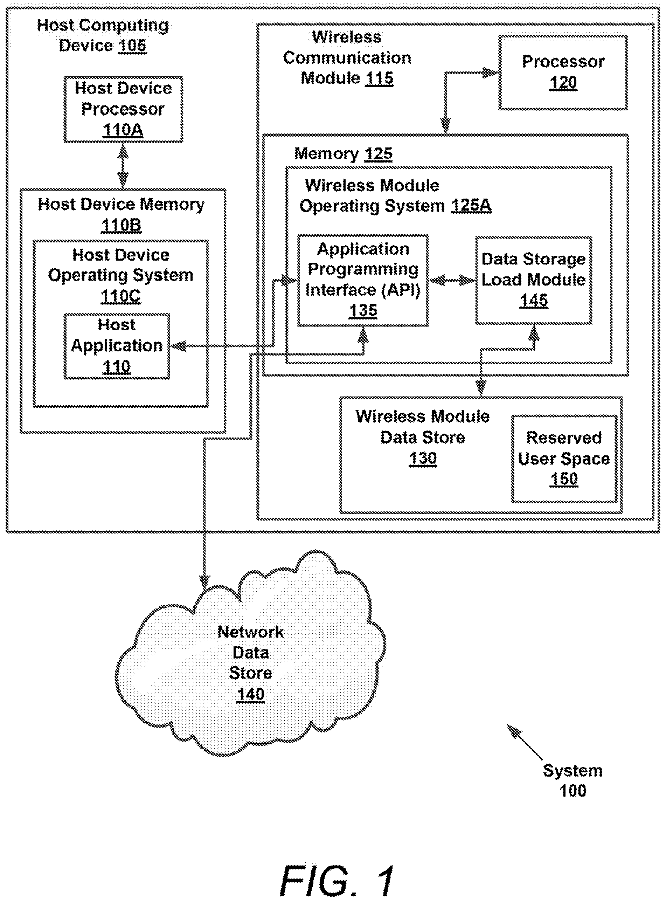

FIG. 1 illustrates an exemplary system 100 that includes a host computing device 105 and a network data store 140. User data generated on the host computing device 105 may be transmitted and received by the host computing device 105 over a network, such as the Internet. User data may also be stored on, and retrieved from, the network data store 140, as will be discussed in greater detail below.

Generally, the host computing device 105 comprises a host device processor 110A and a host device memory 110B, which stores executable instructions that define the functions and operations of a host application 110. In some instances, the host application 110 may be executed within a host device operating system 110C. It will be understood that in some instances, the host device memory 110B may include read only instructions, or the host device memory 110B may include only enough space to accommodate the host application 110.

Indeed, any user data that is generated by the host application 110 may exceed the storage capacity of the host device memory, if any. In accordance with the present disclosure, if the host computing device 105 is without additional data storage space, the host application 110 may store its user data in a wireless module data store 130 of a wireless module, such as wireless communication Module 115.

In some embodiments, the wireless communications module 115 may comprise a processor 120 and a memory 125. The memory 125 includes a wireless module operating system 125A, as well as an API 135 that is exposed to the host application 110. As background, an API may be broadly described as a communication protocol for software components, which are each created with a different programming language. Due to differences in the programming languages used to create the software components, and the protocols employed by both software components, the software components may be unable to interoperate. The API is used as a generic interface by these software components to communicate with each one another. Stated otherwise, an API acts as a translator for the software components.

In some embodiments, the API 135 mediates the exchange of requests and transmission of user data between the host application 110 and a data storage load module 145. For example, the data storage load module 145 may be configured to receive through the API 135, requests or user data from the host application 110. Also, the data storage load module 145 may control the wireless module data store 130 to respond to the requests or store the user data received from the host application 110. Additionally, the data storage load module may return responses or requested user data to the API 135 for forwarding to the host application 110. Thus, the API 135 acts as an intermediary between the host application and the data storage load module 145.

As used herein, the term "module" may also refer to any of an application-specific integrated circuit ("ASIC"), an electronic circuit, a processor (shared, dedicated, or group) that executes one or more software or firmware programs, a combinational logic circuit, and/or other suitable components that provide the described functionalities.

The data storage load module 145 also controls the management of the wireless module data store 130. With regard to management of the wireless module data store 130, the data storage load module 145 may be configured to determine available user space in the wireless module data store 130 and reserve a portion of the available user space. A reserved portion of available user space may include blocks, sectors, or other reservable portions of the wireless module data store 130 that are reserved for use by the host application 110. A reserved user space may be utilized to store user data generated by the host application 110. Returning to the example provided above, a watch host application may store GPS tracking information for a watch host computing device in the reserved user space of the wireless module data store 130.

In some instances, controlling the wireless module data store 130 by the data storage load module 145 may include setting read/write/delete or other similar permissions for a reserved user space 150, where the reserved user space includes at least a portion of the available user space on the wireless module data store 130 that has been reserved for use by the host application 110.

In other embodiments, the data storage load module 145 is configured to allow the host application 110 to save, retrieve, and/or delete user data from the reserved user space 150.

In addition to utilizing available storage space of the wireless communication module 115, the API 135 may be configured to enable the host application 110 to interface with the data storage load module 145 to determine available computing capacity of the processor 120 of the wireless communication module 115. The API 135 may also allow access to the available computing capacity of the processor 120 of the wireless communication module 115. Thus, in addition to utilizing excess storage of the wireless module data sore 130, the API 135 may allow the host application 110 to utilize excess processing capacity of the wireless communication module 115. For example, the processor 120 may dedicate processing cycles, threads, and/or one or more CPU cores (when the processor 120 is a multicore processor).

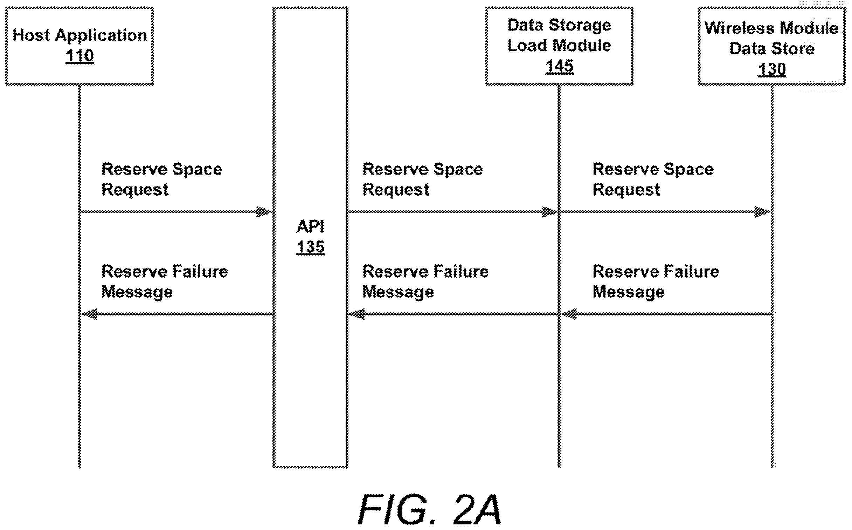

The signal flow diagrams of FIGS. 2A-2F collectively illustrate various operations that exemplify the aforementioned control and management features. FIG. 2A is a signal flow diagram of a method of controlling a wireless module data store, the diagram illustrating a request to reserve space and a response indicative of a failure to reserve space. The host application 110 transmits a reserve space request to the API 135, which forwards the request to the data storage load module 145 of the wireless communication module 115. The request may specify an amount of space that is required by the host application 110. In some instances, the amount of space requested may he defined by a size or volume of the user data that is generated by the host application 110. In other embodiments, the amount of space requested may include a predetermined space size that is defined by the host application 110 developer.

The data storage load module 145 then determines any available user space in the wireless module data store 130. If there is no available user space in the wireless module data store 130, the wireless module data store 130 informs the data storage load module 145 of the lack of available storage space. The data storage load module 145 then transmits a reserve failure message to the API 135, which forwards the same to the host application 110. A failure message may also be returned if the wireless module data store 130 is unable to process the request received from the data storage load module 145.

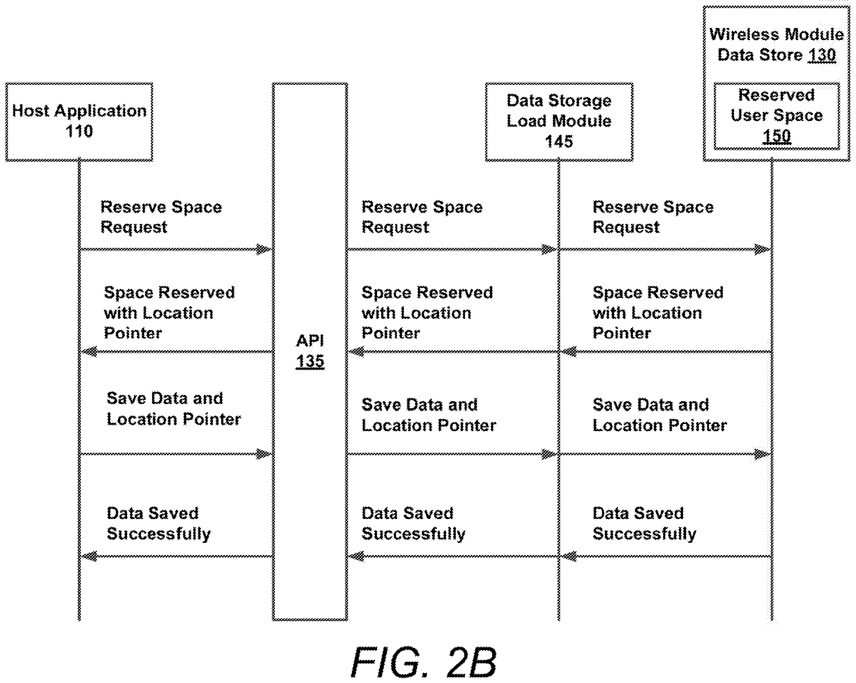

In contrast, FIG. 2B is a signal flow diagram of a method of accessing a wireless module data store 130, where space is successfully reserved and user data is successfully saved in the wireless module data store.

Similarly to FIG. 2A, the host application 110 sends a reserve request message to the data storage load module 145. After the data storage load module 145 determines that there is indeed available storage space on the wireless module data store 130, the data storage load module 145 reserves a portion of the available user space in the wireless module data store 130. More specifically, a reserved user space 150 (also see FIG. 1) is created and a location pointer is defined for the reserved user space 150. It will he understood that the location pointer for the reserved user space 150 may specify blocks, sectors, or other locations of the wireless module data store 130 that are reserved for use by the host application 110. That is, the location pointer uniquely identifies the reserved user space 150 within the wireless module data store 130. In some instances, the location pointer may include an offset and a length for the reserved user space 150. The location pointer is returned back to the host application 110 for future user data access/save/retrieve/delete operations.

FIG. 2B also illustrates an operation of saving of data to the wireless module data store 130 by the host application 110. In some embodiments, the host application 110 transmits a save data request to the API 135. The save data request comprises not only the user data generated by the host application 110, but also the location pointer received from the data storage load module 145. The data storage load module 145 then stores the user data in the reserved user space 150 that is defined by the location pointer.

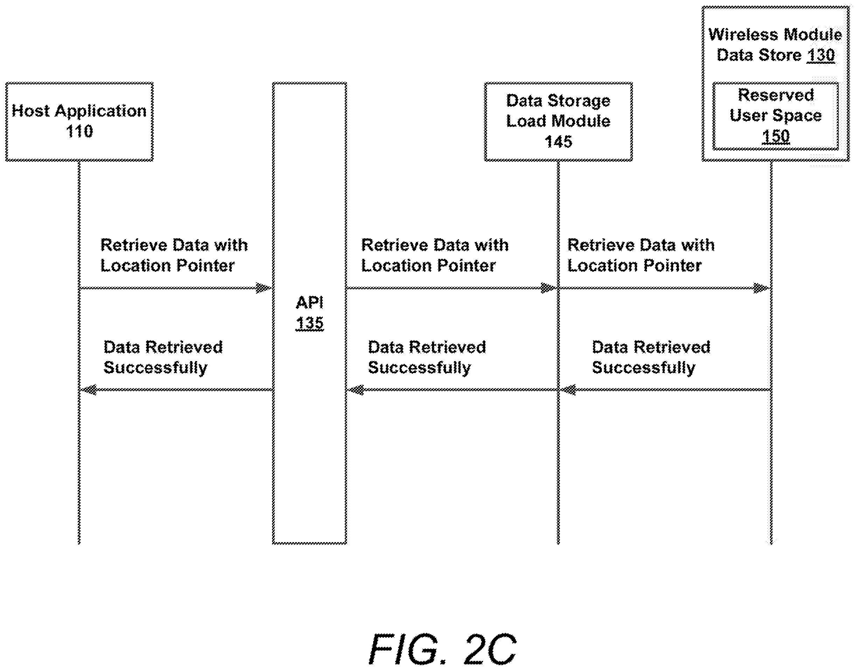

FIG. 2C is a signal flow diagram of a method of accessing a wireless module data store 130, where user data is retrieved from the wireless module data store 130. To obtain previously stored user data from a reserved user space 150, the host application 110 transmits a retrieve data request, along with the location pointer to the data storage load module 145 via the API 135.

The data storage load module 145 obtains the requested user data from the reserved user space 150 using the location pointer. Once the data storage load module 145 obtains the requested data, the data storage load module 145 transmits the retrieved user data back to the host application 110 via the API 135.

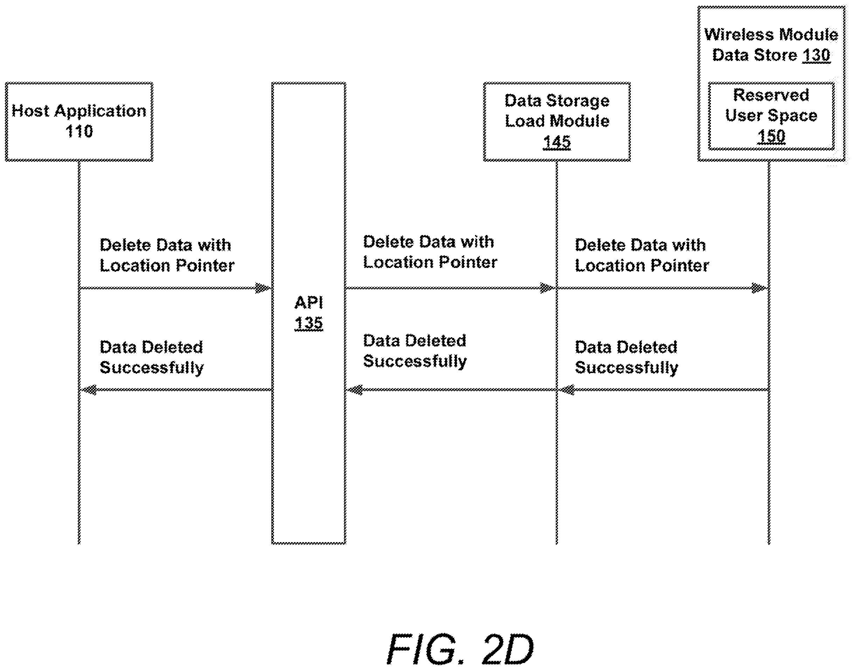

FIG. 2D is a signal flow diagram of a method of accessing a wireless module data store 130. where user data is successfully deleted from the wireless module data store 130. To delete previously stored user data from a reserved user space 150, the host application 110 transmits a delete data request, along with the location pointer to the data storage load module 145 via the API 135.

The data storage load module 145 deletes the requested user data from the reserved user space 150, referenced by the location pointer. Once the data storage load module 145 deletes the requested data, the data storage load module 145 transmits a successful deletion message back to the host application 110 via the API 135.

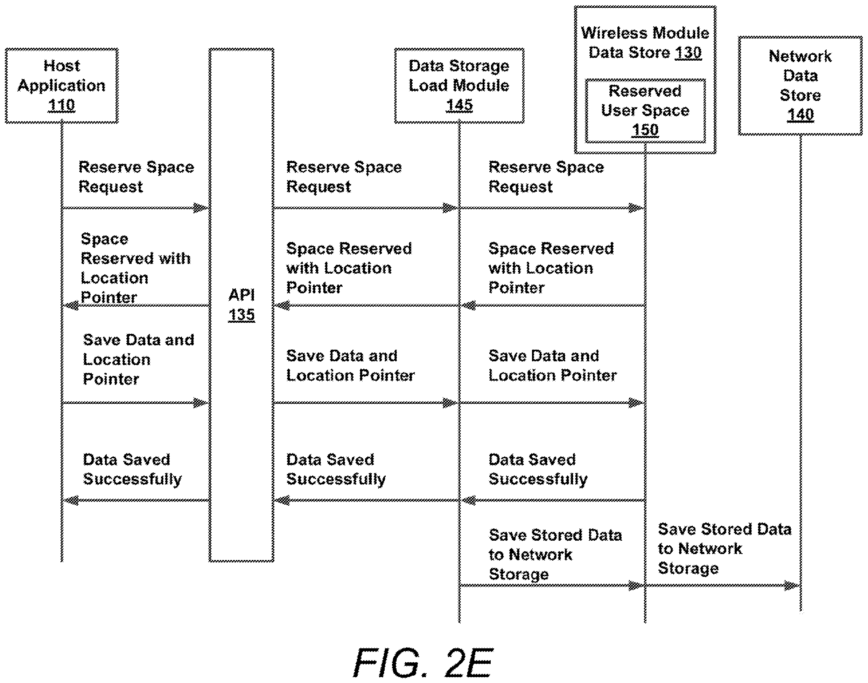

FIG. 2E is a signal flow diagram of a method of storing user data on a network data store 140. The method of FIG, 2E is similar to the method illustrated in FIG. 2B, where data is successfully saved in the reserved user space 150 of the wireless module data store 130. Additionally, the method illustrated in FIG. 2E illustrates the data storage load module 145 transmitting saved stored data to a network data store 140. Although not shown, the data storage load module 145 and the network data store 140 may engage in similar user space establishment and control procedures as those utilized by the data storage load module 145 to establish a reserved user space 150 on the wireless module data store 130, as well as data retrieval, deletion, and other similar operations.

It will be understood that the network storage process illustrated in FIG. 2E may occur synchronously, where the data storage load module 145 transmits user data to the network data store 140 when the user data is generated by the host application 110, or in parallel with storing the user data in the reserved user space 150. Alternatively, the network storage process may occur asynchronously, where the data storage load module 145 batches user data in the reserved user space 150 and transmits the batched user data to the network data store 140 at a later point in time.

In some embodiments, user data may be transmitted by the data storage load module 145 to the network data store 140 according to a schedule. For example, the data storage load module 145 may be configured to transmit stored user data to the network data store during off peak periods. By way of a non-limiting example, if the host application 110 actively operates and generates user data during specific periods of time, the schedule may specify that the data storage load module 145 is to transmit the stored user data to the network data store 140 at a time at which the host application 110 is experiencing reduced usage. Also, the transmission times may be related to current or expected network bandwidth.

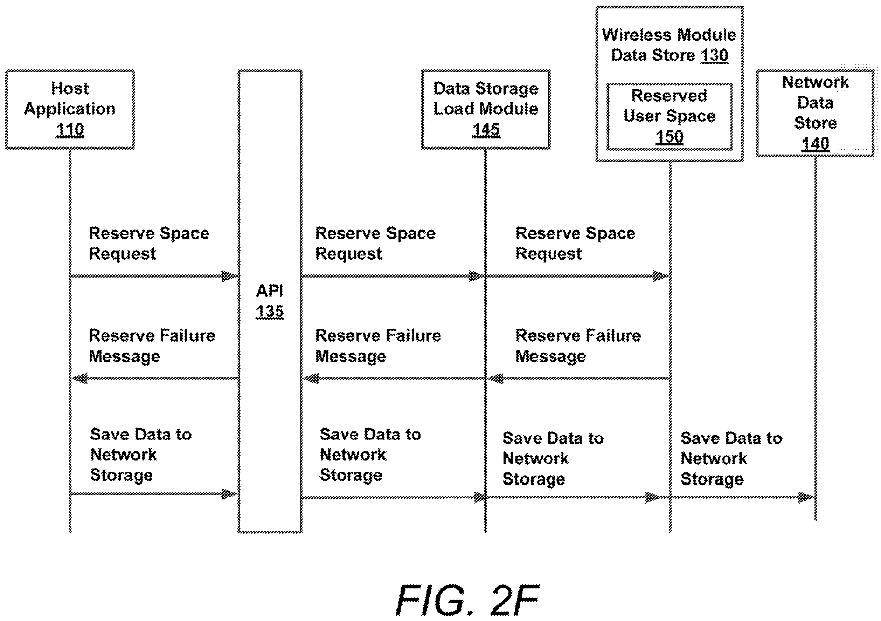

FIG. 2F is a signal flow diagram of a method of storing user data on a network data store when user data cannot be stored on the wireless module data store. The method illustrated in FIG. 2F is similar to the method illustrated in FIG. 2A, with the exception that user data generated by the host application 110 is forwarded to the network data store 140. More specifically, upon the host application 110 receiving notification that a request to reserve user space has been denied, the host application 110 may transmit a message to the API 135 that informs the data storage load module 145 that user data should be stored on the network data store 140.

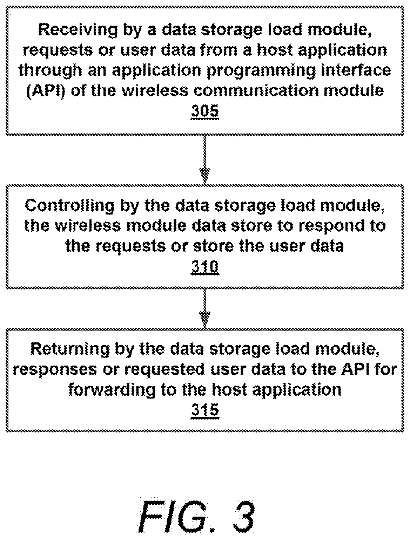

FIG. 3 is a flowchart of an exemplary method for utilizing a wireless module data store 130 of a wireless communication module 115 that resides on a host computing device 105. The wireless communication module 115 is controlled by a processor 120. As mentioned previously, the wireless communication module 115 includes a memory 125 coupled to the processor 120 for storing computer program instructions. Exemplary instructions include the wireless module operating system 125A and the data storage load module 145.

In some embodiments, the method is shown as including receiving 305 by a data storage load module 145, requests or user data from a host application 110 through an application programming interface (API) 135 of the wireless communication module 115 residing on the host computing device 105. Additionally, the method includes controlling 310 by the data storage load module 145, the wireless module data store 130 to respond to the requests or store the user data. In some embodiments, the method also includes returning 315 by the data storage load module 145, responses or requested user data to the API 135 for forwarding to the host application 110.

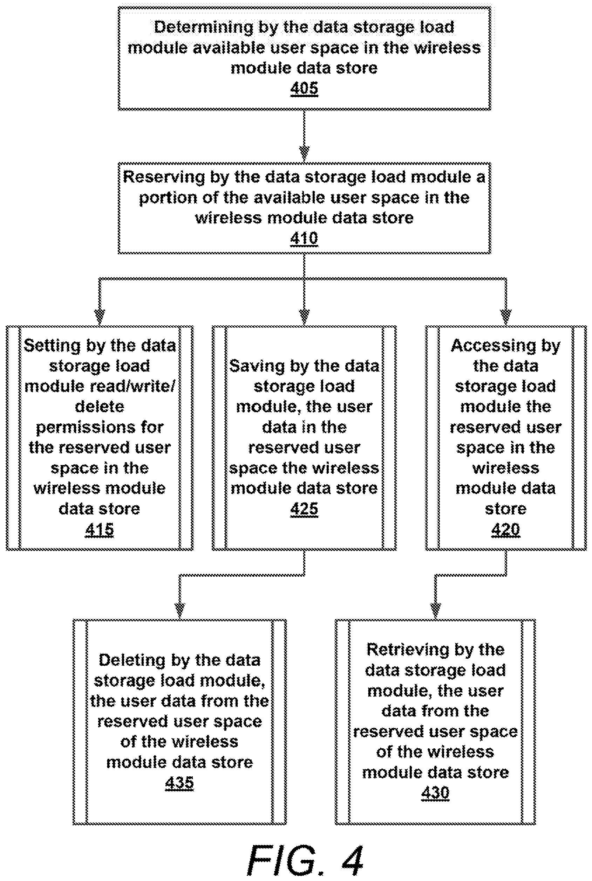

FIG. 4 illustrates a variety of control sub-methods that may be executed in conjunction with the method described in FIG. 3. More specifically, the various control sub-methods of FIG. 4 are associated with the controlling 310 operation of FIG. 3. In some embodiments, controlling may comprise determining 405 by the data storage load module 145 available user space in the wireless module data store 130, as well as reserving 410 by the data storage load module 145 a portion of the available user space in the wireless module data store 130. Again, this portion of the available user space is referred to as the reserved user space 150.

FIG. 4 also illustrates several alternative control sub-methods 415-425 that may be executed subsequent to establishing the reserved user space 150 by the data storage load module 145.

Step 405 includes determining, by the data storage load module 145, available user space in the wireless module data store 130. After determining available user space in the wireless module data store 130, the method includes reserving 410, by the data storage load module 145, a portion of the available user space in the wireless module data store 130. In relation to FIG. 3, it will be understood that the steps of determining and reserving (405 and 410) of FIG. 4 may be executed prior to the step 305 of receiving by a data storage load module 145, requests or user data from a host application 110 through an application programming interface (API) 135 of the wireless communication module 115.

The alternative control sub-methods 415-425 may comprise specific methods of the controlling 310 step of FIG. 3. That is, each of the alternative control sub-methods 415-425 may be independently executed by the data storage load module 145.

In some instances, a control sub-method for the data storage load module 145 may include setting 415, by the data storage load module 145, read/write/delete permissions for the reserved user space 150 in the wireless module data store 130. Also, the method may include saving 425 by the data storage load module 145, user data a reserved user space 150 of the wireless module data store 130.

In some instances, a control sub-method for the data storage load module 145 may include accessing 420, by the data storage load module 145, a reserved user space 150 in the wireless module data store 130. In some instances, subsequent to accessing 420 the reserved user space 150, the control sub-method may include retrieving 430 by the data storage load module 145, user data stored in the reserved user space 150 of the wireless module data store 130.

In other embodiments, a control sub-method for the data storage load module 145 may include saving 425 user data a reserved user space 150 of the wireless module data store 130 may occur before deleting 435 by the data storage load module 145, user data saved in the reserved user space 150 of the wireless module data store 130.

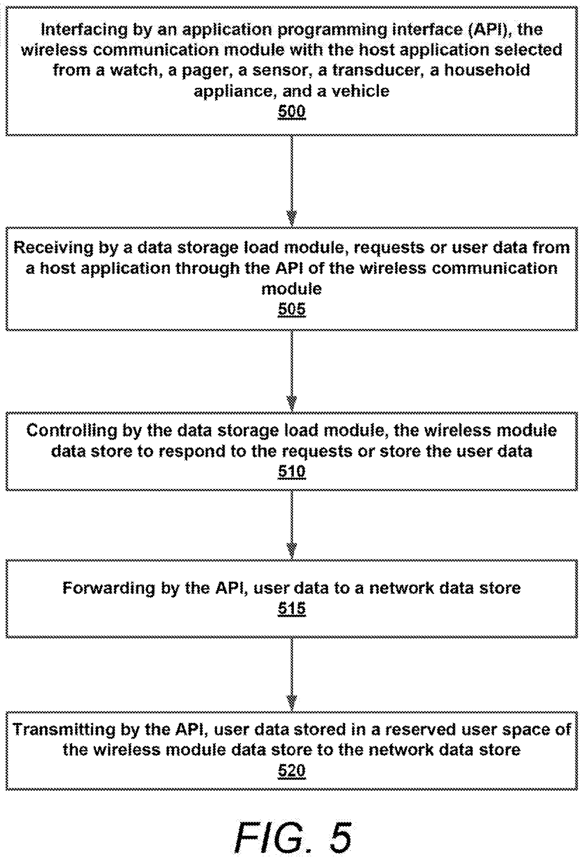

FIG. 5 is a flowchart of a method for storing or forwarding user data generated by the host application 110 to a network data store 140. Generally, the method includes interfacing 500 by an API 135, the wireless communication module 115 with a host application 110. The host application 110 may include an application for a watch, pager, or sensor, or other host application required for use with the host computing device 105.

After interfacing, the method includes receiving 505 by a data storage load module 145, requests or user data from the host application 10 through the API 135, as well as controlling 510 by the data storage load module 145, the wireless module data store 130 to respond to requests or store the user data.

In some instances, the method optionally includes forwarding 515 by the API 135, user data to a network data store 140. Alternatively, the method optionally includes transmitting 520, user data stored in a reserved user space 150 to the network data store 140.

It is noteworthy that any hardware platform suitable for performing the processing described herein is suitable for use with the systems and methods provided herein. Computer-readable storage media refer to jury medium or media that participate in providing instructions to a central processing unit (CPU), a processor, a microcontroller, or the like. Such media may take forms including, but not limited to, non-volatile and volatile media such as optical or magnetic disks and dynamic memory, respectively.

Computer program code for carrying out operations for aspects of the present technology may be written in any combination of one or more programming languages, including an object oriented programming language, conventional procedural programming languages, or similar programming languages. The program code may execute entirely on the user's computer, partly on the user's computer, as a stand-alone software package, partly on the user's computer and partly on a remote computer or entirely on the remote computer or server. In the latter scenario, the remote computer may be coupled with the user's computer through any type of network, including a local area network (LAN) or a wide area network (WAN), or the connection may he made to an external computer (for example, through the Internet using an Internet Service Provider).

Embodiments of the present technology are described above with reference to flowchart illustrations and/or block diagrams of methods, apparatus (systems) and computer program products according to embodiments of the present technology. It will he understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to he performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present technology. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, m fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

## Claims

1. A wireless communication module (115) arranged to be comprised in a host computing device (105), the wireless communication module (115) comprising:
a processor (120) configured to control the wireless communication module (115);
a memory (125) coupled to the processor (120) for storing computer program instructions;
a wireless module data store (130) configured to store user data generated by the host application (110) if the user data exceeds a storage capacity of a host device memory (110B); and
an application programming interface, API, (135) configured to interface the wireless communication module (115) with a host application (110) residing on the host computing device (105), wherein the API (135) is configured to enable the host application (110) to access the wireless module data store (130) in the wireless communication module (115),
wherein the API (135) is configured to enable the host application (110) to interface with a data storage load module (145) to:
request to reserve user space in the wireless module data store (130); and
receive, in response, a reserve failure message in case of lack of available user space or reserve a portion of the available user space in the wireless module data store (130) for use by the host application (110) to store the user data if there is available user space, and wherein
the data storage load module (145) is configured to:
receive through the API (135), requests or user data from the host application (110);
control the wireless module data store (130) to respond to the requests or store the user data;
return responses or requested user data to the API (135) for forwarding to the host application (110); and
wherein the API (135) is further configured to:
upon the receipt from the data storage module (145) of a reserve failure message, notify the host application (110) that a request to reserve user space has been denied; and is configured, responsive to receipt of a message from the host application (110) that user data should be stored on a network store (140), to inform the data storage module (145) that user data should be stored on the network data store (140) and to forward the user data to a network data store (140).

2. The wireless communication module (115) according to claim 1, wherein the API (135) is configured to give the host application (110) access to the data storage load module (145) to save user data in the reserved user space (150) in the wireless module data store (130) or delete user data saved in the reserved user space (150) of the wireless module data store (130).

3. The wireless communication module (115) according to claim 1, wherein the API (135) is configured to allow the host application (110) access to the data storage load module (145) to:
determine available computing capacity of the processor (120) of the wireless communication module (115); and
access by the host application (110) the available computing capacity of the wireless communication module (115).

4. The wireless communication module (115) according to claim 1, wherein the API (135) is further configured to transmit user data stored in the reserved user space (150) of the wireless module data store (130) to the network data store (140).

5. The wireless communication module (115) according to claim 4, wherein the API (135) configured to batch user data in the reserved user space (150) and transmit the batched user data to the network data store (140).

6. A host computing device (105), comprising:
a host device processor (110A);
a host application (110) executing on the host device processor (110A); and
a wireless communication module (115) as set out in any one of claims 1 to 5.

7. A method for utilizing a wireless module data store (130) of a wireless communication module (115) comprised in a host computing device (105), the wireless communication module (115) being controlled by a processor (120), the wireless communication module (115) having a memory (125) coupled to the processor (120) for storing computer program instructions, the method comprising:
receiving (305) by a data storage load module (145), requests or user data from a host application (110) residing on the host computing device (105), through an application programming interface, API, (135) of the wireless communication module (115), wherein user data generated by the host application (110) is stored in the wireless module data store (130), if the user data exceeds a storage capacity of a host device memory (110B);
controlling (310) by the data storage load module (145), the wireless module data store (130) to respond to the requests or store the user data; and
returning (315) by the data storage load module (145), responses or requested user data to the API (135) for forwarding to the host application (110), wherein controlling (310) comprises:
receiving, by the data storage module (145) a request to reserve user space;
determining (405) by data storage load module (145), available user space in the wireless module data store (130);
reserving (410) by the data storage load module (145), a portion of the available user space in the wireless module data store (130) for use by the host application (110) to store user data if there is available user space,
or responding with a reserve failure message in case of lack of available user space;
receiving, by the host application (110), notification from the API (135) that a request to reserve user space has been denied upon the receipt by the API (135) from the data storage module (145) of a reserve failure message, and, in this case,
transmitting a message from the host application (110) to the API (135) informing the data load module (145) that user data should be stored on the network data store (410); and
informing, by the API (135), the data storage module (145) that user data should be stored on the network data store (140), and forwarding (515) by the API (135), user data to a network data store (140).

8. The method according to claim 7, wherein controlling (310) comprises:
accessing (420) by the data storage load module (145) the reserved user space (150) in the wireless module data store (130); and
setting (415) by the data storage load module (145) read/write/delete permissions for the reserved user space (150) in the wireless module data store (130).

9. The method according to claim 7, wherein controlling (310) comprises saving (425) by data storage load module (145), user data in the reserved user space (150) of the wireless module data store (130) or deleting (435) by the data storage load module (145), user data saved in the reserved user space (150) of the wireless module data store (130).

10. The method according to claim 7, wherein controlling (310) comprises retrieving (430) by the data storage load module (145), user data stored in the reserved user space (150) of the wireless module data store (130).

## Patentansprüche

1. Modul für drahtlose Kommunikation (115), das dafür ausgelegt ist, in einem Host-Computer (105) enthalten zu sein, wobei das Modul für drahtlose Kommunikation (115) umfasst:
einen Prozessor (120), der dafür konfiguriert ist, das Modul für drahtlose Kommunikation (115) zu steuern;
einen Speicher (125), der mit dem Prozessor (120) gekoppelt ist, zum Speichern von Computerprogrammbefehlen;
einen Funkmodul-Datenspeicher (130), der dafür konfiguriert ist, Benutzerdaten zu speichern, die durch die Host-Anwendung (110) erzeugt werden, wenn die Benutzerdaten eine Speicherkapazität eines Host-Gerätespeichers (110B) überschreiten; und
eine Schnittstelle zur Programmierung von Anwendungen, API, (135), die dafür konfiguriert ist, die Schnittstelle für das Modul für drahtlose Kommunikation (115) zu einer Host-Anwendung (110) zu bilden, die sich auf dem Host-Computer (105) befindet, wobei die API (135) dafür konfiguriert ist, es der Host-Anwendung (110) zu ermöglichen, auf den Funkmodul-Datenspeicher (130) in dem Modul für drahtlose Kommunikation (115) zuzugreifen,
wobei die API (135) dafür konfiguriert ist, es der Host-Anwendung (110) zu ermöglichen, eine Schnittstelle zu einem Datenspeicher-Lademodul (145) zu bilden, um:
die Reservierung von Benutzerspeicherplatz in dem Funkmodul-Datenspeicher (130) anzufordern; und
als Reaktion, im Falle eines Mangels an verfügbarem Benutzerspeicherplatz, eine Reservierungsfehlermeldung zu empfangen oder einen Teil des zur Verfügung stehenden Benutzerspeicherplatzes in dem Funkmodul-Datenspeicher (130) zu reservieren, zur Verwendung durch die Host-Anwendung (110), um die Benutzerdaten zu speichern, wenn Benutzerspeicherplatz zur Verfügung steht, und wobei
das Datenspeicher-Lademodul (145) dafür konfiguriert ist,
über die API (135) Anforderungen oder Benutzerdaten von der Host-Anwendung (110) zu empfangen;
den Funkmodul-Datenspeicher (130) dahingehend zu steuern, dass er auf die Anforderungen reagiert oder die Benutzerdaten speichert;
Antworten oder angeforderte Benutzerdaten an die API (135) zur Weiterleitung an die Host-Anwendung (110) zurückzusenden; und
wobei die API (135) dafür konfiguriert ist,
nach dem Empfang einer Reservierungsfehlermeldung von dem Datenspeichermodul (145), der Host-Anwendung (110) mitzuteilen, dass eine Anforderung zur Reservierung von Benutzerspeicherplatz verweigert wurde; und dafür konfiguriert ist,
als Reaktion auf den Empfang einer Meldung von der Host-Anwendung (110), dass Benutzerdaten in einem Netzwerkspeicher (140) gespeichert werden sollen, das Datenspeichermodul (145) zu informieren, dass Benutzerdaten in dem Netzwerkdatenspeicher (140) gespeichert werden sollen und die Benutzerdaten zu einem Netzwerkdatenspeicher (140) weiterzuleiten.

2. Modul für drahtlose Kommunikation (115) nach Anspruch 1, wobei die API (135) dafür konfiguriert ist, der Host-Anwendung (110) Zugriff auf das Datenspeicher-Lademodul (145) zu gewähren, um Benutzerdaten in dem reservierten Benutzerspeicherplatz (150) in dem Funkmodul-Datenspeicher (130) zu speichern oder Benutzerdaten zu löschen, die in dem reservierten Benutzerspeicherplatz (150) des Funkmodul-Datenspeichers (130) gespeichert sind.

3. Modul für drahtlose Kommunikation (115) nach Anspruch 1, wobei die API (135) dafür konfiguriert ist, der Host-Anwendung (110) Zugriff auf das Datenspeicher-Lademodul (145) zu ermöglichen, um:
die verfügbare Rechenkapazität des Prozessors (120) des Moduls für drahtlose Kommunikation (115) zu ermitteln; und
durch die Host-Anwendung (110) auf die verfügbare Rechenkapazität des Moduls für drahtlose Kommunikation (115) zuzugreifen.

4. Modul für drahtlose Kommunikation (115) nach Anspruch 1, wobei die API (135) ferner dafür konfiguriert ist, in dem reservierten Benutzerspeicherplatz (150) des Funkmodul-Datenspeichers (130) gespeicherte Benutzerdaten zu dem NetzwerkDatenspeicher (140) zu übertragen.

5. Modul für drahtlose Kommunikation (115) nach Anspruch 4, wobei die API (135) dafür konfiguriert ist, Benutzerdaten in dem reservierten Benutzerspeicherplatz (150) zu stapeln und die gestapelten Benutzerdaten zu dem Netzwerkdatenspeicher (140) zu übertragen.

6. Host-Computer (105) umfassend:
einen Host-Geräteprozessor (110A);
eine Host-Anwendung (110), die auf dem Host-Geräteprozessor (110A) ausgeführt wird; und
ein Modul für drahtlose Kommunikation (115) nach einem der Ansprüche 1 bis 5.

7. Verfahren zum Nutzen eines Funkmodul-Datenspeichers (130) eines Moduls für drahtlose Kommunikation (115), das in einem Host-Computer (105) enthalten ist, wobei das Modul für drahtlose Kommunikation (115) durch einen Prozessor (120) gesteuert wird, wobei das Modul für drahtlose Kommunikation (115) einen Speicher (125) aufweist, der mit dem Prozessor (120) gekoppelt ist, zum Speichern von Computerprogrammbefehlen, wobei das Verfahren umfasst:
Empfangen (305), durch ein Datenspeicher-Lademodul (145), von Anforderungen oder Benutzerdaten von einer Host-Anwendung (110), die sich auf dem Host-Computer (105) befindet, über eine Schnittstelle zur Programmierung von Anwendungen, API, (135) des Moduls für drahtlose Kommunikation (115), wobei von der Host-Anwendung (110) erzeugte Benutzerdaten in dem Funkmodul-Datenspeicher (130) gespeichert werden, wenn die Benutzerdaten eine Speicherkapazität von einem Host-Gerätespeicher (110B) überschreiten;
Steuern (310), durch das Datenspeicher-Lademodul (145), des Funkmodul-Datenspeichers (130) dahingehend, dass er auf die Anforderungen reagiert oder die Benutzerdaten speichert; und
Zurücksenden (315) durch das Datenspeicher-Lademodul (145), von Antworten oder angeforderten Benutzerdaten an die API (135) zur Weiterleitung an die Host-Anwendung (110),
wobei das Steuern (310) umfasst:
Empfangen, durch das Datenspeichermodul (145), einer Anforderung, Benutzerspeicherplatz zu reservieren;
Ermitteln (405), durch das Datenspeicher-Lademodul (145), des zur Verfügung stehenden Benutzerspeicherplatzes in dem Funkmodul-Datenspeicher (130);
Reservieren (410), durch das Datenspeicher-Lademodul (145), eines Teils des zur Verfügung stehenden Benutzerspeicherplatzes in dem Funkmodul-Datenspeicher (130) zur Verwendung durch die Host-Anwendung (110), um Benutzerdaten zu speichern, wenn Benutzerspeicherplatz zur Verfügung steht,
oder Reagieren mit einer Reservierungsfehlermeldung, falls ein Mangel an verfügbarem Benutzerspeicherplatz vorliegt;
Empfangen, durch die Host-Anwendung (110), einer Benachrichtigung von der API (135), dass eine Anforderung zur Reservierung von Benutzerspeicherplatz verweigert wurde, nach dem Empfang einer Reservierungsfehlermeldung durch die API (135) von dem Datenspeichermodul (145), und, in diesem Fall,
Übertragen einer Meldung von der Host-Anwendung (110) zu der API (135), die das Datenlademodul (145) darüber informiert, dass Benutzerdaten auf dem Netzwerkdatenspeicher (410) gespeichert werden sollen; und
Informieren, durch die API (135), des Datenspeichermoduls (145), dass Benutzerdaten auf dem Netzwerkdatenspeicher (140) gespeichert werden sollen, und Weiterleiten (515), durch die API (135), von Benutzerdaten an einen Netzwerkdatenspeicher (140).

8. Verfahren nach Anspruch 7, wobei das Steuern (310) umfasst:
Zugreifen (420), durch das Datenspeicher-Lademodul (145), auf den reservierten Benutzerspeicherplatz (150) in dem Funkmodul-Datenspeicher (130); und
Einstellen (415), durch das Datenspeicher-Lademodul (145), von Berechtigungen zum Lesen/Schreiben/Löschen für den reservierten Benutzerspeicherplatz (150) in dem Funkmodul-Datenspeicher (130).

9. Verfahren nach Anspruch 7, wobei das Steuern (310) umfasst: Speichern (425), durch das Datenspeicher-Lademodul (145), von Benutzerdaten in dem reservierten Benutzerspeicherplatz (150) des Funkmodul-Datenspeichers (130) bzw. Löschen (435), durch das Datenspeicher-Lademodul (145) von in dem reservierten Benutzerspeicherplatz (150) des Funkmodul-Datenspeichers (130) gespeicherten Benutzerdaten.

10. Verfahren nach Anspruch 7, wobei das Steuern (310) umfasst: Abrufen (430), durch das Datenspeicher-Lademodul (145), von Benutzerdaten, die in dem reservierten Benutzerspeicherplatz (150) des Funkmodul-Datenspeichers (130) gespeichert sind.

## Revendications

1. Un module de communication sans fil (115) agencé pour être compris dans un dispositif informatique hôte (105), le module de communication sans fil (115) comprenant :
un processeur (120) configuré pour contrôler le module de communication sans fil (115) ;
une mémoire (125) couplée au processeur (120) pour le stockage d'instructions de programme informatique ;
une mémoire de données de module sans fil (130) configurée pour stocker des données utilisateur générées par l'application hôte (110) si les données utilisateur dépassent une capacité de stockage de la mémoire d'un dispositif hôte (110B) ; et
une interface de programmation d'application, API, (135) configurée pour interfacer le module de communication sans fil (115) avec une application hôte (110) résidant sur le dispositif informatique hôte (105), dans lequel l'API (135) est configurée pour permettre à l'application hôte (110) d'accéder à la mémoire de données de module sans fil (130) dans le module de communication sans fil (115),
dans lequel l'API (135) est configurée pour permettre à l'application hôte (110) de s'interfacer avec un module de chargement de stockage de données (145) pour :
demander de réserver de l'espace utilisateur dans le mémoire de données de module sans fil (130) ; et
recevoir, en réponse, un message d'échec de réservation en cas de manque d'espace utilisateur disponible ou réserver une partie de l'espace utilisateur disponible dans la mémoire de données de module sans fil (130) pour être utilisée par l'application hôte (110) pour stocker les données utilisateur s'il y a de l'espace utilisateur disponible,
et dans lequel le module de chargement de stockage de données (145) est configuré pour :
recevoir, par l'intermédiaire de l'API (135), des requêtes ou des données utilisateur de l'application hôte (110) ;
contrôler la mémoire de données de module sans fil (130) pour répondre aux requêtes ou stocker les données de l'utilisateur ;
renvoyer les réponses ou les données utilisateur demandées à l'API (135) pour qu'elles soient transmises à l'application hôte (110) ;
et dans lequel l'API (135) est en outre configurée pour :
à réception d'un message d'échec de réservation en provenance du module de stockage des données (145), notifier à l'application hôte (110) qu'une demande de réservation d'espace utilisateur a été refusée,
et est configurée pour, en réponse à la réception d'un message de l'application hôte (110) indiquant que les données de l'utilisateur doivent être stockées dans une mémoire du réseau (140), informer le module de stockage des données (145) que les données utilisateur doivent être stockées dans la mémoire de données du réseau (140) et transmettre les données utilisateur à la mémoire de données du réseau (140).

2. Module de communication sans fil (115) selon la revendication 1, dans lequel l'API (135) est configurée pour donner à l'application hôte (110) l'accès au module de chargement de stockage de données (145) pour sauvegarder les données utilisateur dans l'espace utilisateur réservé (150) de la mémoire de données de module sans fil (130) ou pour supprimer les données utilisateur sauvegardées dans l'espace utilisateur réservé (150) de la mémoire de données de module sans fil (130).

3. Module de communication sans fil (115) selon la revendication 1, dans lequel l'API (135) est configurée pour permettre à l'application hôte (110) d'accéder au module de chargement de stockage de données (145) pour :
déterminer la capacité de calcul disponible du processeur (120) du module de communication sans fil (115) ; et
accéder par l'application hôte (110) à la capacité de calcul disponible du module de communication sans fil (115).

4. Module de communication sans fil (115) selon la revendication 1, dans lequel l'API (135) est en outre configurée pour transmettre des données utilisateur stockées dans l'espace utilisateur réservé (150) de la mémoire de données de module sans fil (130) à la mémoire de données du réseau (140).

5. Le module de communication sans fil (115) selon la revendication 4, dans lequel l'API (135) est configurée pour regrouper les données utilisateur dans l'espace utilisateur réservé (150) et transmettre les données utilisateur regroupées à la mémoire de données du réseau (140).

6. Un dispositif informatique hôte (105), comprenant : un processeur de dispositif hôte (110A); une application hôte (110) s'exécutant sur le processeur de dispositif hôte (110A) ; et un module de communication sans fil (115) selon l'une quelconque des revendications 1 à 5.

7. Procédé pour utiliser une mémoire de données de module sans fil (130) d'un module de communication sans fil (115) compris dans un dispositif informatique hôte (105), le module de communication sans fil (115) étant contrôlé par un processeur (120), le module de communication sans fil (115) ayant une mémoire (125) couplée au processeur (120) pour stocker des instructions de programme informatique, le procédé comprenant :
la réception (305) par un module de chargement de stockage de données (145), de demandes ou de données utilisateur provenant d'une application hôte (110) résidant sur le dispositif informatique hôte (105), par l'intermédiaire d'une interface de programmation d'application, API, (135) du module de communication sans fil (115), dans lequel les données utilisateur générées par l'application hôte (110) sont stockées dans la mémoire de données de module sans fil (130), si les données utilisateur dépassent une capacité de stockage de la mémoire d'un dispositif hôte (110B) ;
le contrôle (310) par le module de chargement de stockage de données (145), de la mémoire de données de module sans fil (130) pour répondre aux requêtes ou stocker les données utilisateur ; et
le renvoi (315) par le module de chargement de stockage de données (145), des réponses ou des données utilisateur demandées, à l'API (135), pour les transmettre à l'application hôte (110),
le contrôle (310) comprenant :
la réception, par le module de stockage des données (145), d'une demande de réservation d'espace utilisateur ;
la détermination (405), par le module de chargement de stockage de données (145), de l'espace utilisateur disponible dans la mémoire de données de module sans fil (130) ;
la réservation (410) par le module de chargement de stockage de données (145), d'une partie de l'espace utilisateur dans la mémoire de données de module sans fil (130) pour utilisation par l'application hôte (110) pour stocker des données utilisateur s'il y a de l'espace utilisateur disponible, ou le renvoi d'un message d'échec de réservation en cas de manque d'espace utilisateur disponible ;
la réception, par l'application hôte (110), d'une notification de l'API (135) indiquant qu'une demande de réservation d'espace utilisateur a été refusée, à la réception par l'API (135) d'un message d'échec de réservation provenant du module de stockage de données (145), et, dans ce cas,
la transmission d'un message de l'application hôte (110) à l'API (135) informant le module de chargement des données (145) que les données utilisateur doivent être stockées dans la mémoire de données du réseau (410) ; et
l'information, par l'API (135), au module de stockage des données (145) que les données utilisateur doivent être stockées sur dans la mémoire de données du réseau (140), et la transmission (515) par l'API (135), des données utilisateur à la mémoire de données du réseau (140).

8. Procédé selon la revendication 7, dans lequel le contrôle (310) comprend :
l'accès (420) par le module de chargement de stockage de données (145) à l'espace utilisateur réservé (150) dans la mémoire de données de module sans fil (130) ; et
le réglage (415) par le module de chargement de stockage de données (145) d'autorisations de lecture/écriture/suppression pour l'espace utilisateur réservé (150) dans la mémoire de données de module sans fil (130).

9. Procédé selon la revendication 7, dans laquelle le contrôle (310) comprend la sauvegarde (425) par le module de chargement de stockage de données (145), de données utilisateur dans l'espace utilisateur réservé (150) de la mémoire de données de module sans fil (130) ou la suppression (435) par le module de chargement de stockage de données (145), de données utilisateur sauvegardées dans l'espace utilisateur réservé (150) de la mémoire de données de module sans fil (130).

10. Procédé selon la revendication 7, dans laquelle le contrôle (310) comprend la récupération (430) par le module de chargement de stockage de données (145), de données utilisateur stockées dans l'espace utilisateur réservé (150) de la mémoire de données de module sans fil (130).
